# FASCICULE DE BREVET EUROPEEN

(11) **EP 3 455 549 B1**
(45) Date de publication et mention de la délivrance du brevet: **27.04.2022**
(21) Numéro de dépôt: 17728908.9
(22) Date de dépôt: 09.05.2017
(51) Int. Cl.: F21S 43/14, F21S 43/237, F21S 43/243, F21S 43/247, F21S 43/20, F21S 43/31, F21S 43/40, B60Q 1/56, B60Q 1/22, B60Q 1/20, B60Q 1/26

(54) **ÉQUIPEMENT DE SIGNALISATION ARRIÈRE À MULTIFONCTION D'ÉCLAIRAGE**
KFZ HECKLEUCHTE MIT MEHREREN LICHTFUNKTIONEN
REAR VEHICLE SIGNAL LIGHT COMPRISING SEVERAL LIGHT FUNCTIONS

(30) Priorité: 11.05.2016 FR 1654204
(43) Date de publication de la demande: 20.03.2019
(73) Titulaire: PSA Automobiles SA, 78300 Poissy (FR)
(72) Inventeur: GONCALVES, Whilk Marcelino, 75013 PARIS (FR); SEBE, Emeric, 78390 BOIS D ARCY (FR); PERON, Rodolphe, 95220 HERBLAY (FR); SURUGUE, Michel, 91190 GIF SUR YVETTE (FR)
(86) Numéro de dépôt international: PCT/FR2017/051101
(87) Numéro de publication internationale: WO 2017/194869

(56) Documents cités:
- EP-A1- 1 886 871
- WO-A1-2017/023824
- DE-A1-102005 010 117
- DE-A1-102007 041 120
- DE-A1-102014 104 891
- JP-A- 2015 221 637
- JP-A- 2016 002 830
- US-A1- 2011 069 505

## Description

### DOMAINE TECHNIQUE

L'invention se rapporte à un équipement de signalisation arrière à multifonction d'éclairage destiné à un véhicule automobile.

Cette invention fait partie du domaine de l'équipement électrique-des véhicules automobiles destiné à l'éclairage, et plus particulièrement de l'éclairage arrière. L'éclairage arrière comporte quelques feux utiles au conducteur du véhicule automobile, comme le feu de recul, et de nombreux feux utiles aux personnes extérieures au véhicule : feux de position, de frein, de recul, d'éclairage de plaque de police, et feu antibrouillard arrière. La technologie actuelle utilisée pour ces éclairages est constituée d'éclairages aux ampoules à incandescence et de LED, acronyme de « diode électroluminescente » (« Light- Emitting Diode » en terminologie anglaise). Les LED présentent de nombreux avantages, en particulier leur faible consommation et leur longévité. Ces LED sont généralement installées sur des PCB, acronyme de plaque de circuit imprimé (« Printed Circuit Board » en terminologie anglaise).

Concernant les feux arrière de la plaque de police d'un véhicule automobile, ils sont en général doublés et placés au-dessus ou en-dessous de la plaque de police pour l'éclairer sans la cacher.

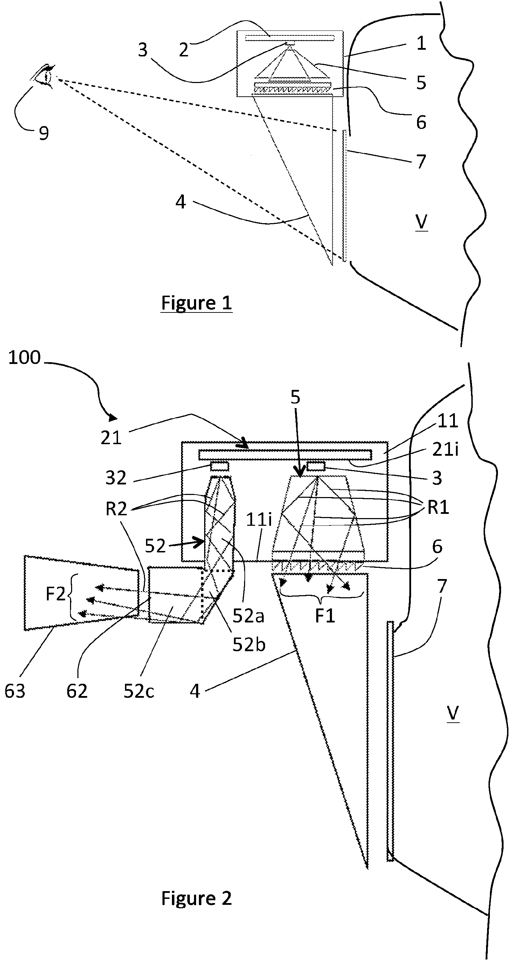

Un équipement de signalisation classique pour plaque de police arrière d'un véhicule automobile est présenté en référence à la vue schématique en coupe de la figure 1. Sur cette figure 1, une LED 3 éclaire par le haut la plaque de police 7 placée contre un véhicule « V ». Cette LED 3, orientée vers le bas, est placée sur le côté inférieur d'une plaque 2 pour circuit imprimé PCB placée en position horizontale au-dessus d'une lentille primaire 5. Ces 3 équipements - LED 3, PCB 2 et lentille primaire 5 - sont logés dans un boitier 1 placé au-dessus de la plaque de police 7. Une lentille de Fresnel 6 oriente le faisceau lumineux de sortie 4 de la LED 3 vers la plaque de police 7. La position du boitier 1 au-dessus de la plaque de police 7 ne gêne pas la vision de la plaque de police 7 dans le champ 9 éclairé par le faisceau de sortie 4. Un deuxième boitier 1 est souvent également installé au-dessus de la plaque de police 7. Le ou les boitiers 1 peuvent également être placés en-dessous de la plaque de police 7.

### ÉTAT DE LA TECHNIQUE

De nombreuses améliorations ont été apportées à l'utilisation des LEDs dans les feux d'éclairage de véhicule. Le document de brevet WO 2011026088 décrit par exemple une installation simple de LED installées sur les deux côtés d'une plaque PCB placée horizontalement dans un ensemble d'éclairage arrière. Ces LED sont destinées à éclairer directement, de haut en bas, une plaque de police au moyen d'une LED et, à partir du dessus de cette plaque PCB, à éclairer, au moyen de plusieurs LED, directement plusieurs feux tels que les feux de position ou feux stop.

Par ailleurs, le document WO 2005002918 présente un feu arrière pourvu d'un guide d'onde, placé sur le côté de ce feu et apte à récupérer une partie de la lumière du feu arrière pour fournir la lumière ainsi récupérée à l'éclairage de la plaque de police. Un autre document, EP 1 750 054 présente un feu d'éclairage à trois LED alignées derrière un module optique en forme de « V » placé de manière centrale devant ces LED, et servant à la fois de guide de lumière pour la LED centrale, et d'outil d'éclairage de plusieurs types de feux.

Ces améliorations permettent d'économiser le nombre de LED ou d'améliorer l'esthétique des lumières émises, mais aucune ne prévoit de produire une deuxième fonction lumineuse à partir d'un même support d'éclairage afin de simplifier l'éclairage de l'ensemble des feux arrière d'un véhicule.

**On** connait également du document EP1886871A, un équipement de signalisation arrière conforme au préambule de la revendication 1.

Cependant un tel équipement met en œuvre deux réflecteurs qui réduisent la compacité de l'équipement.

### EXPOSÉ DE L'INVENTION

L'invention exploite la position basse et centrale de la plaque de police arrière sur la carrosserie et de son dispositif d'éclairage en regard, afin de permettre l'installation supplémentaire d'au moins un feu arrière, par exemple d'un feu arrière de brouillard et/ou d'un feu de recul ou autre, donc de produire une deuxième et éventuellement d'autres fonctions lumineuses.

Plus précisément, la présente invention a pour objet un équipement de signalisation arrière conforme à la partie caractérisante de la revendication 1.

Un tel équipement permet donc une installation d'un feu supplémentaire de recul, de brouillard arrière ou de sécurité sans modification sensible de la façade arrière de véhicules et donc sans gêner la visibilité de la plaque de police. Une telle installation supplémentaire est en particulier utile pour respecter la réglementation de certains des pays où les véhicules sont immatriculés.

Selon des modes de réalisation préférés :
- le guide de lumière comporte une portion d'entrée, une portion coudée et une portion de sortie s'étendant perpendiculairement à la plaque de police;
- la portion coudée du guide de lumière est positionnée hors d'un boitier contenant la plaque de circuit imprimé, ce boitier étant configurée de sorte que les portions coudée et de sortie du guide de lumière sont sensiblement extérieures au boitier tout en restant hors du champ d'éclairage de la plaque de police pour guider le faisceau de sortie;
- l'optique de feu réglementaire et la source lumineuse supplémentaire sont choisies dans des gammes d'équipements définis pour des feux arrière antibrouillard ;
- alternativement, l'optique de feu réglementaire et la source lumineuse supplémentaire sont choisies dans des gammes d'équipements définis pour des feux de recul ;
- les fonctions et caractéristiques photométriques des sources lumineuses de l'éclairage de la plaque de police et du feu réglementaire sont définies indépendamment;
- les sources lumineuses sont des LED ;
- la portion de sortie du guide de lumière présente une surface de sortie striée qui génère une distribution de la lumière adaptée au feu réglementaire, ces stries permettant une dispersion de la lumière adaptée verticalement et horizontalement au feu réglementaire en utilisation;
- la portion coudée du guide de lumière oriente le faisceau de lumière de la source supplémentaire selon une direction sensiblement horizontale en utilisation pour maintenir le faisceau de sortie au-dessus de la plaque de police.

L'invention se rapporte également à un véhicule automobile comportant un équipement de signalisation arrière à multifonction d'éclairage tel que défini ci-dessus.

Dans le présent texte, les qualificatifs « supérieur » et « inférieur » « sur / au-dessus », « sous / en-dessous », se rapportent aux localisations d'éléments par rapport aux équipements positionnés en utilisation standard. Le qualificatif « vertical » se rapporte à la direction de la force gravitationnelle à l'endroit considéré, et le qualificatif « horizontal » correspond à une direction dans un plan perpendiculaire à la direction verticale. Sur les figures, des éléments identiques ou analogues sont repérés par un même signe de référence qui renvoie au(x) passage(s) correspondant(s) de la description.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, une vue schématique en coupe d'un équipement de signalisation classique pour la plaque de police arrière d'un véhicule automobile (déjà commentée);
- la figure 2, une vue schématique en coupe d'un exemple d'équipement de signalisation arrière bi-fonction selon l'invention pour l'éclairage de la plaque de police arrière et l'émission d'un feu antibrouillard comme source lumineuse supplémentaire d'un véhicule automobile, selon l'invention ; et
- la figure 3, une vue en perspective de l'exemple d'équipement de la figure 2.

### DESCRIPTION DÉTAILLÉE

La vue schématique de la figure 2 présente, en coupe, un exemple d'équipement de signalisation arrière bi-fonction 100 selon l'invention. Sur cette figure 2 l'éclairage d'une plaque de police arrière plane 7, placée sur le véhicule « V », est réalisé au moyen d'une LED 3. La LED 3 est orientée vers le bas, c'est-à-dire verticalement en direction de la partie inférieure du véhicule « V », et fixée sur la face inférieure 21i d'une plaque 21 de circuit imprimé PCB disposée horizontalement.

De plus, la LED 3 est disposée au-dessus d'une lentille primaire 5 qui concentre les rayons lumineux R1 du faisceau F1 provenant de la LED 3, ces trois pièces - plaque 21, LED 3 et lentille 5 - étant logées dans un boitier 11 positionné au-dessus de la plaque de police 7. Une lentille de Fresnel 6, couplée optiquement en sorite de la lentille primaire 5, oriente le faisceau lumineux 4 de la LED 3 sortant du boitier 11 vers la plaque de police 7.

Fixée également sur la face inférieure 21i de la plaque PCB 21, une LED supplémentaire 32 émet vers le bas, comme la LED 3, et ses rayons lumineux R2 pénètrent dans un guide de lumière 52 pour former un faisceau F2. Le guide de lumière 52 conduit la lumière de la LED 32, en réflexion totale, dans trois portions successives: une portion verticale d'entrée 52a, puis une portion coudée 52b, et enfin une portion horizontale de sortie 52c.

Le coude 52b est disposé avantageusement à proximité, et si possible en fonction de l'environnement, au plus près de la surface inférieure 11i du boitier 11, de sorte que le guide de lumière 52 ne gêne pas la visibilité de la plaque de police 7 s'étendant ainsi verticalement en-dessous du guide de lumière 52. En sortie du guide de lumière, le faisceau F2 de la LED 32 traverse une surface striée 62 permettant une dispersion verticale et horizontale de la lumière. L'optique de feu réglementaire 63, placée en regard de de la striée 62 du guide de lumière 52, est une optique de feu arrière antibrouillard dans cet exemple de réalisation. Dans ce cas, la LED 32 émet une lumière dans une bande spectrale lumineuse rouge.

Cet équipement de signalisation arrière bi-fonction 100 peut, alternativement, être équipé d'une source lumineuse supplémentaire pour un feu de recul, avec une LED 32 de lumière blanche et une optique 63 de feu de recul. Un feu de sécurité peut également être mis en place en coopération avec une LED adaptée en mode et fréquence d'émission ainsi qu'en intervalle spectral.

Le placement d'une LED supplémentaire 32 sur la plaque PCB 21 permet ainsi l'installation aisée d'un feu de signalisation réglementaire 63 en exploitant la position avantageuse de l'installation d'éclairage de la plaque de police 7.

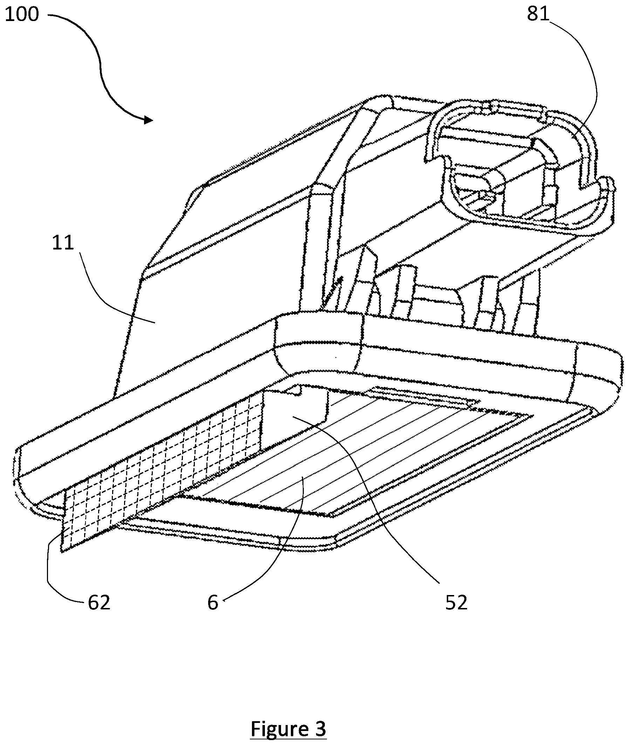

La figure 3 montre une vue en perspective de l'équipement de signalisation arrière bi-fonction 100 de la figure 2. Sur cette vue extérieure sont visibles : le boitier 11 (abritant les LED 3 et 32, cf. figure 2), la lentille de Fresnel 6 (d'éclairage de la plaque de police 7, cf. figure 2), la surface de sortie 62 striée du guide de lumière 52, ainsi que le connecteur électrique 81 d'alimentation des LED.

L'invention n'est pas limitée aux exemples de réalisation décrits et représentés. En particulier, deux LED supplémentaires ou plus peuvent être installées sur le circuit PCB longeant le bord horizontal de la plaque de police. Le coude du guide de lumière peut être réalisé sous forme d'une courbure continue et/ou d'une courbure présentant un ou des biseaux.

Par ailleurs, les portions d'extrémité (d'entrée et de sortie) du guide d'onde peuvent s'étendre selon des directions appropriées en fonction de la configuration arrière du véhicule. Le boitier peut avoir une forme et des dimensions adaptées pour permettre au guide d'onde de rester au-dessus de la plaque de police.

En outre, le boitier peut être installé aussi bien sur le bord inférieur, avec ses sources lumineuses orientées vers le haut, que sur le bord supérieur, avec ses sources lumineuses orientées vers le bas.

De manière plus générale, le boitier d'éclairage est installé de sorte que le guide de lumière, et donc le faisceau conduit par ce guide, reste hors de portée du champ de vision 9 (cf. figure 1) de la plaque de police, recoupant le faisceau lumineux 4 du champ d'éclairage de cette plaque.

De plus, les sources lumineuses peuvent être des LED, des ampoules à incandescence, à décharge ou à halogène.

## Revendications

1. Équipement de signalisation arrière à multifonction d'éclairage (100) destiné à un véhicule automobile, comportant une plaque de circuit imprimé (21) équipé d'au moins une source lumineuse (3) couplée optiquement à une lentille primaire (5) d'éclairage d'une plaque de police plane (7), et d'une source lumineuse supplémentaire (32) agencée sur la plaque de circuit imprimé (21), **caractérisé en ce que** la lentille primaire (5) d'éclairage de la plaque de police (7) est couplée optiquement en sortie à une lentille secondaire de Fresnel (6) pour orienter le faisceau lumineux (F1) émis par la source lumineuse (3) vers la plaque de police et **en ce que** la source de lumière supplémentaire (32) est couplée optiquement à au moins un guide de lumière (52) relié à une optique (63) de feu de signalisation réglementaire, le guide de lumière (52) conduisant la lumière émise par la source supplémentaire (32) selon un faisceau (F2) maintenu, en utilisation, hors du champ d'éclairage de la plaque de police (7).

2. Équipement de signalisation arrière (100) selon la revendication 1, dans lequel le guide de lumière (52) comporte une portion d'entrée (52a), une portion coudée (52b) et une portion de sortie (52c) s'étendant perpendiculairement à la plaque de police (7).

3. Équipement de signalisation arrière (100) selon la revendication 2, dans lequel la portion coudée (52b) du guide de lumière (52) est positionnée hors d'un boitier (11) contenant la plaque de circuit imprimé (21), ce boitier (11) étant configuré de sorte que les portions coudée (52b) et de sortie (52c) du guide de lumière (52) sont extérieures au boitier (11) tout en restant hors du champ d'éclairage de la plaque de police (7) pour guider le faisceau de sortie (F2).

4. Équipement de signalisation arrière (100) selon l'une quelconque des revendications précédentes, dans lequel l'optique de feu réglementaire (63) et la source lumineuse supplémentaire (32) sont choisies dans des gammes d'équipements définis pour des feux arrière antibrouillard.

5. Équipement de signalisation arrière (100) selon l'une quelconque des revendications 1 à 3, dans lequel l'optique de feu règlementaire (63) et la source lumineuse supplémentaire (32) sont choisies dans des gammes d'équipements définis pour des feux de recul.

6. Équipement de signalisation arrière (100) selon l'une quelconque des revendications précédentes, dans lequel les fonctions et caractéristiques photométriques des sources lumineuses (3, 32) d'éclairage de la plaque de police (7) et du feu réglementaire (63) sont définies indépendamment.

7. Équipement de signalisation arrière (100) selon l'une quelconque des revendications précédentes, dans lequel les sources lumineuses (3, 32) sont des LED.

8. Équipement de signalisation arrière (100) selon l'une quelconque des revendications précédentes, dans lequel la portion de sortie (52c) du guide de lumière (52) est pourvu d'une surface de sortie striée (62) qui génère une distribution de la lumière adaptée au feu réglementaire, ces stries permettant une dispersion de la lumière (R2) adaptée verticalement et horizontalement au feu réglementaire en utilisation.

9. Véhicule automobile, **caractérisé en ce qu'**il comporte au moins un équipement de signalisation arrière à multifonction d'éclairage (100) selon l'une quelconque des revendications précédentes.

## Patentansprüche

1. Multifunktionale Beleuchtungs-Hecksignalisierungsausrüstung (100) für ein Kraftfahrzeug, die eine Leiterplatte (21) umfasst, die mit mindestens einer Lichtquelle (3), die optisch mit einer Primärlinse (5) zur Beleuchtung einer ebenen Polizeiplatte (7) gekoppelt ist, und mit einer zusätzlichen Lichtquelle (32), die auf der Leiterplatte (21) angeordnet ist, ausgestattet ist, **dadurch gekennzeichnet, dass** die Primärlinse (5) zur Beleuchtung der Polizeiplatte (7) ausgangsseitig optisch mit einer sekundären Fresnel-Linse (6) gekoppelt ist, um den von der Lichtquelle (3) emittierten Lichtstrahl (F1) auf die Polizeiplatte zu lenken, und dass die zusätzliche Lichtquelle (32) optisch mit mindestens einem Lichtleiter (52) gekoppelt ist, der mit einer Optik (63) einer vorschriftsmäßigen Signalleuchte verbunden ist, wobei der Lichtleiter (52) das von der zusätzlichen Lichtquelle (32) emittierte Licht in einem Strahl (F2) leitet, der im Gebrauch außerhalb des Beleuchtungsfeldes der Polizeistafel (7) gehalten wird.

2. . Rückwärtige Signalausrüstung (100) nach Anspruch 1, wobei der Lichtleiter (52) einen Eintrittsabschnitt (52a), einen abgewinkelten Abschnitt (52b) und einen Austrittsabschnitt (52c) aufweist, die sich senkrecht zu der Polizeiplatte (7) erstrecken.

3. . Hintere Signaleinrichtung (100) nach Anspruch 2, wobei der abgewinkelte Abschnitt (52b) des Lichtleiters (52) außerhalb eines Gehäuses (11) positioniert ist, das die Leiterplatte (21) enthält, wobei das Gehäuse (11) so konfiguriert ist, dass der abgewinkelte Abschnitt (52b) und der Ausgangsabschnitt (52c) des Lichtleiters (52) außerhalb des Gehäuses (11) liegen, während sie außerhalb des Beleuchtungsfeldes der Polizeiplatte (7) bleiben, um den Ausgangsstrahl (F2) zu führen.

4. . Rücklichtsignalausrüstung (100) nach einem der vorhergehenden Ansprüche, wobei die Optik des vorgeschriebenen Lichts (63) und die zusätzliche Lichtquelle (32) aus Ausstattungsreihen ausgewählt werden, die für Nebelschlussleuchten definiert sind.

5. . Rücklichtsignalanlage (100) nach einem der Ansprüche 1 bis 3, wobei die Optik des vorgeschriebenen Lichts (63) und die zusätzliche Lichtquelle (32) aus Ausstattungsreihen ausgewählt sind, die für Rückfahrscheinwerfer definiert sind.

6. . Rücklichtsignalausrüstung (100) nach einem der vorhergehenden Ansprüche, wobei die Funktionen und photometrischen Eigenschaften der Lichtquellen (3, 32) zur Beleuchtung des Polizeizeichens (7) und des vorgeschriebenen Lichts (63) unabhängig voneinander definiert sind.

7. . Heckmarkierungsausrüstung (100) nach einem der vorhergehenden Ansprüche, wobei die Lichtquellen (3, 32) LEDs sind.

8. . Rückwärtige Signalausrüstung (100) nach einem der vorhergehenden Ansprüche, wobei der Austrittsabschnitt (52c) des Lichtleiters (52) mit einer geriffelten Austrittsfläche (62) versehen ist, die eine an die vorgeschriebene Leuchte angepasste Lichtverteilung erzeugt, wobei diese Riffelungen eine an die vorgeschriebene Leuchte im Gebrauch vertikal und horizontal angepasste Streuung des Lichts (R2) ermöglichen.

9. . Kraftfahrzeug, **dadurch gekennzeichnet, dass** es mindestens eine hintere Signaleinrichtung mit multifunktionaler Beleuchtung (100) nach einem der vorhergehenden Ansprüche umfasst.

## Claims

1. Multifunctional rear light signalling equipment (100) for a motor vehicle, comprising a printed circuit board (21) equipped with at least one light source (3) optically coupled to a primary lens (5) for illuminating a plane police plate (7), and an additional light source (32) arranged on the printed circuit board (21) **characterized in that** the primary lens (5) for illuminating the police plate (7) is optically coupled at the output to a secondary Fresnel lens (6) for directing the light beam (F1) emitted by the light source (3) towards the police plate, and **in that** the additional light source (32) is optically coupled to at least one light guide (52) connected to an optical system (63) of a regulation traffic light, the light guide (52) conducting the light emitted by the additional source (32) in a beam (F2) maintained, in use, outside the field of illumination of the police plate (7).

2. The rear signaling equipment (100) of claim 1, wherein the light guide (52) includes an input portion (52a), a bent portion (52b), and an output portion (52c) extending perpendicular to the police plate (7).

3. The rear signaling equipment (100) of claim 2, wherein the bent portion (52b) of the light guide (52) is positioned outside of a housing (11) containing the circuit board (21), said housing (11) being configured such that the bent (52b) and exit (52c) portions of the light guide (52) are external to the housing (11) while remaining outside of the field of illumination of the police plate (7) for guiding the output beam (F2).

4. The rear signaling equipment (100) according to any of the preceding claims, wherein the regulation light optic (63) and the additional light source (32) are selected from ranges of equipment defined for rear fog lights.

5. The rear signaling equipment (100) according to any one of claims 1 to 3, wherein the regulation light optic (63) and the additional light source (32) are selected from ranges of equipment defined for reverse lights.

6. The rear signaling equipment (100) according to any one of the preceding claims, wherein the functions and photometric characteristics of the light sources (3, 32) for illuminating the license plate (7) and the regulation light (63) are defined independently.

7. The rear signaling equipment (100) according to any of the preceding claims, wherein the light sources (3, 32) are LEDs.

8. The rear signaling equipment (100) according to any one of the preceding claims, wherein the output portion (52c) of the light guide (52) is provided with a ridged output surface (62) that generates a light distribution adapted to the regulation light, these ridges allowing a light dispersion (R2) adapted vertically and horizontally to the regulation light in use.

9. A motor vehicle, **characterized in that** it comprises at least one multifunctional lighting rear signaling equipment (100) according to any of the preceding claims.
